# EUROPEAN PATENT APPLICATION

(11) **EP 0 884 885 A2**
(43) Date of publication of application: **16.12.1998**
(21) Application number: 98440123.2
(22) Date of filing: 08.06.1998
(51) Int. Cl.: H04M 3/50, H04M 1/65

(54) **Method and device for providing customized telephone announcements**

(30) Priority: 10.06.1997 IT MI971359
(71) Applicant: ALCATEL ALSTHOM COMPAGNIE GENERALE D'ELECTRICITE, 75008 Paris (FR)
(72) Inventor: Lisca, Lorenzo, 20100 Milano (IT)
(74) Representative: Schätzle, Albin, Dipl.-Phys.

(57) **Abstract**

A method and an improved digital telephone answering recording machine are disclosed which automatically provide customized announcements to different calling parties, recognized through the calling line identification presentation service or through DTMF access code (mailbox).

The digital telephone answering recording machine is enabled to recognize the calling party. A special editor is used for programming, either locally or remotely, the device profile both with respect to recorded announcements and to special actions to be taken; a software module is used for managing a database storing configuration data, announcements and messages and for coordinating the actions specified in the profile.

## Description

The present invention relates to a method for automatically providing, through a subscriber instrument connectable to the public switched telephone network, customized telephone announcements to different calling parties with the possibility of remotely controlling the operations by the owner (user). The invention relates also to a digital telephone answering-recording machine adapted to implement this method.

The French Patent Application n° 8304433 (Publication number 2542952) discloses an automatic and time-deferred call transfer device for telephone station. Upon receipt of a call, the device invites the calling party to dial his telephone number through his keypad (which has to be a DTMF dialing one, of course).

This telephone number is stored and, afterwards, a transfer number, through which the called party can be reached, is dialed so the latter is informed of the received call and invited to dial back said stored number thus allowing a time-deferred connection between the calling and called parties.

Other devices, such as digital telephone answering-recording machines are already available on the market, which can be remotely switched on and off and allow the owner to remotely listen to stored messages . Moreover, these devices are provided with a "filtering" facility, i.e. they can be disabled and nonetheless allow the reception of a desired call through an access code provided to a given calling party.

Such a machine is, for instance, already on the market identified by the word MEMOVOX (trademark).

All these automatic devices connected to the subscriber line of the public network are able to provide the calling party with a single and generic announcement or, at the most, a second announcement informing that, due to storage problems, it is not possible to store the message from the calling party; the announcement can be modified both locally and remotely, but it is always the same announcement that is provided, independently of the calling party. The main object of the present invention is to provide a method which allows, a subscriber instrument connected to the public switched network to transmit customized announcements to different calling parties once they have been recognized.

Another object of the present invention is to provide a device adapted to implement the above method and which is able to store an announcement correlated to the identity of the calling party, and therefore directly available. Another object of the present invention is to provide a device of the above mentioned type, which allows the entry and/or the modification of such individual announcements also remotely.

Yet another object of the present invention is to provide a device of the above mentioned type which allows the local and remote activation of call transfer and/or other supplementary services.

These and other objects are achieved by a method of automatically providing through an user terminal connected to the public switched network, customized telephone announcements to different calling parties as set forth in claim 1 and by a digital telephone answering-recording machine as set forth in claim 15.

The invention will now be explained by reference to a preferred but not exclusive embodiment thereof and in connection with the accompanying drawings in which:
- Fig.1 is a schematic block diagram of a digital telephone answering-recording machine adapted to implement the method in accordance with the invention;
- Fig. 2 diagrammatically depicts an example of application of the method and device for providing customized telephone announcements to different calling parties in accordance with the invention.

The device adapted to implement the method in accordance with the invention must be able to carry out the following functions:
- recognize automatically the calling party;
- store the received information and provide customized announcements;
- activate the call transfer and/or other supplementary services;
- allow the remote control of the device by its owner.

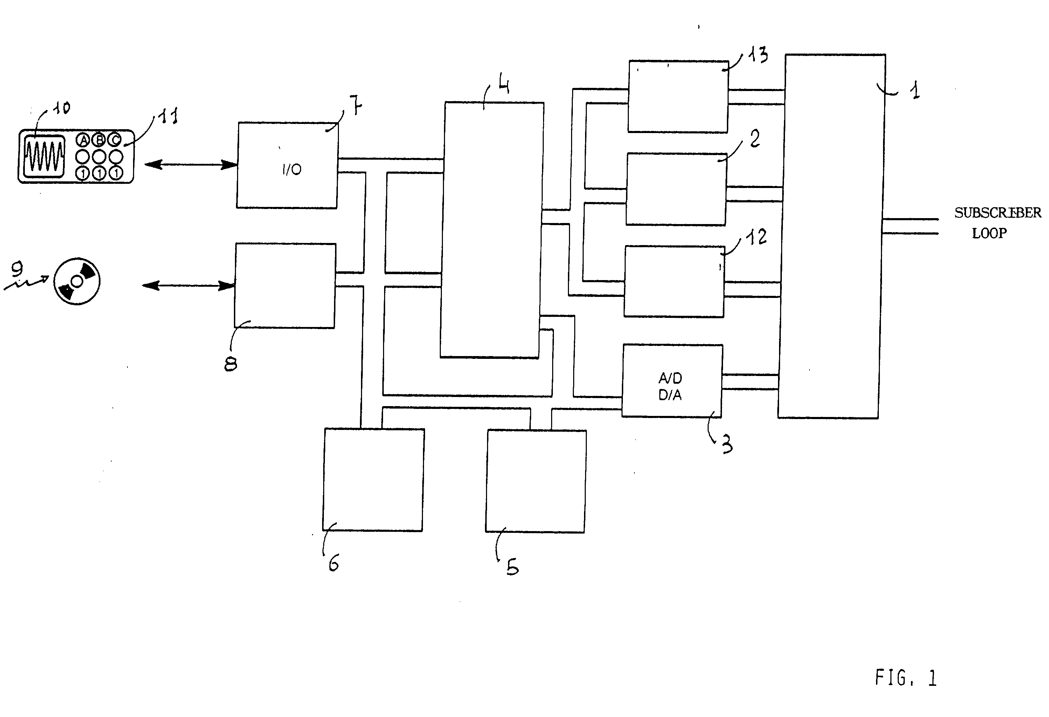

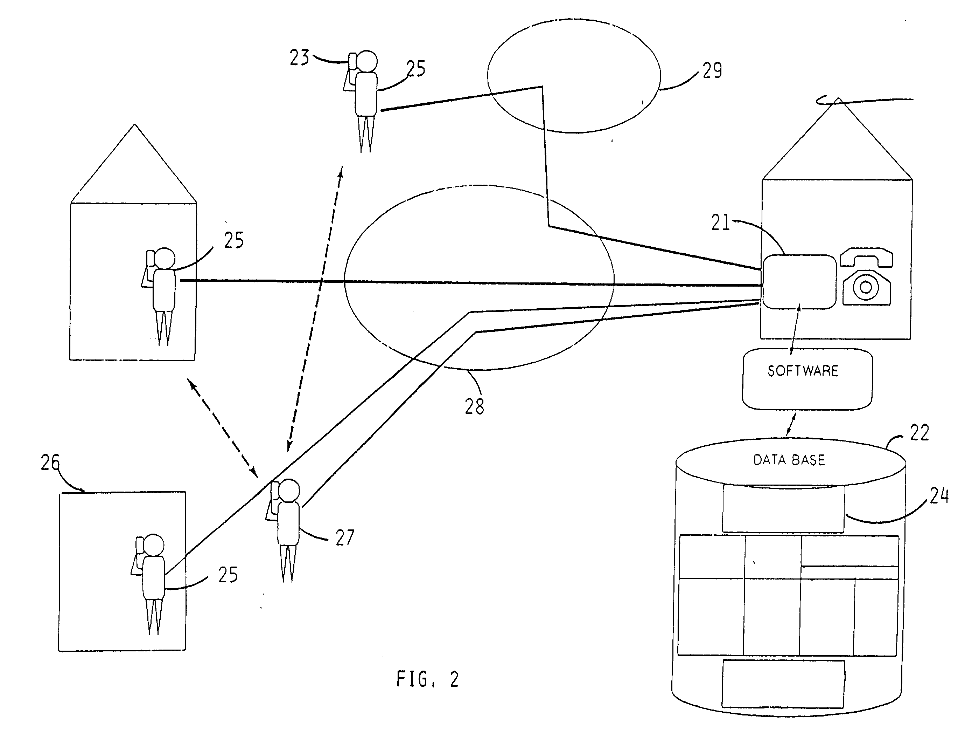

The best mode of realizing such a device is to improve a digital telephone recording-answering machine having a microprocessor standard architecture. It includes (see Fig. 1) a line interface 1 for connection with the subscriber loop, which is in turn connected to a circuitry 2 able to recognize DTMF digits and to an A/D and D/A converter 3, both connected to a Central Processing Unit (CPU) 4, which is the central and intelligent module of the device. Connected with the CPU 4 are a program Random Access Memory (RAM) 5, a Read Only Memory 6 (bootstrap ROM), and an I/O User Interface 7 . Originally, this architecture is provided with a mass storage device 9 (disc memory or non-volatile RAM) designed to contain all information conceming telephone numbers and relative messages/ announcements and operative instructions, a display 10 with relative keyboard 11, the display being enhanced to facilitate the search and handling of the database correlated with the telephone numbers by the user and to entry and display text messages as well as operative instructions, and a driver 8 for driving the mass storage 9. Connected with line interface 1 and CPU 4 further are a device 12 able to recognize the calling number indication transmitted by the telephone exchange 28 (Fig. 2) and a telephone automatic dialer 13 designed to activate the call transfer service.

It is a simple matter for a person having ordinary skill in the art to provide the standard architecture of a digital telephone answering-recording machine with the above described components to enable it to perform the functions described above, and therefore further details are not provided here.

Having described the overall hardware structure of the telephone answering-recording machine adapted to implement the method in accordance with the invention, a description of an example of software architecture follows.

Therein, the following functional blocks can be contemplated:
1 Supervisor
2 New telephone number entry management
3 Individual announcement modification management
4 Modification of actions correlated with a given telephone number (operative instruction) management
5 Removal of a telephone number (and relative announcement and correlated action)
6 Call processing as a conventional telephone answering machine (also when the telephone number or the access code has not been recognized).
7 Call with calling party recognition task
8 Call with access code recognition task
9 Call transfer

A brief description of each block is made hereinafter along with an algorithmic description in metalanguage of non conventional modules, whose abstraction level is such that every single action corresponds to a library function already known for systems of this kind.
1) SUPERVISOR: it is the main program which activates all the other functional modules; it must be able to identify the inputs provided both locally, through keyboard, and remotely, through DTMF commands, and to activate the suitable procedures.
2) NEW TELEPHONE NUMBER ENTRY MANAGEMENT: this function can be activated both locally and remotely (less easy); the algorithm, at metalanguage level, is the following:
   BEGIN
   Get new number
   IF (new number not present in the database)
   THEN
   Request a message
   Store the message
   Play the message
   Ask for confirmation
   IF (message = OK)
   THEN
   Require associated action (*) END
   END
   END
3) INDIVIDUAL ANNOUNCEMENT MODIFICATION MANAGEMENT: same structure as block No. 2.
4) MODIFICATION OF ACTIONS CORRELATED WITH A GIVEN TELEPHONE NUMBER MANAGEMENT: same structure as block No. 2.
5) REMOVAL OF A TELEPHONE NUMBER (and relative announcement and correlated actions): same structure as block No. 2.
6) NORMAL CALL PROCESSING: this is the case when the device has been set in the normal telephone answering machine mode or the DTMF code has not been found in the database.
7) CALL WITH CALLING PARTY RECOGNITION TASK.
   This procedure is activated if the device has been set up for carrying it out and the calling line number has been found in the database.
   BEGIN
   Recognize the calling party
   IF (calling party is recognized)
   THEN
   Select announcement
   Provide announcement
   Select consequent action
   Execute consequent action
   EXIT
   ELSE
   Provide generic announcement
   Store message
   END
   END
8) CALL WITH ACCESS CODE RECOGNITION TASK
   BEGIN
   Provide generic announcement
   Store message
   END
   Activate DTMF identifier
   Provide generic announcement
   IF (DTMF code recognized)
   THEN
   Stop providing generic announcement
   Provide customized announcement
   Store associated message
   Execute correlated action
   EXIT
   ELSE
   Store message
   END IF
   END
9) CALL TRANSFER: (when the call transfer is a consequent action or "forced" by the owner of the device).
   BEGIN
   Provide call transfer communication
   Hook-on
   Hook-off
   Select transfer call
   Hook-on
   END

*N.B.: associated action stands for what the device has to do once the message is recorded; the following actions may occur:
- hook-on
- store a calling party's message
- hook-on and automatically activate the call transfer (in this circumstance the announcement could be: "please, call again in a moment, the call will be transferred")
- provide a second announcement after reception of the calling party's message
- activate one of the supplementary services.

Having briefly described both the hardware and software architectures of a digital telephone answering-recording machine adapted to implement the method in accordance with the invention, the operation will be described in short below (see Fig. 2).

The telephone answering-recording machine 21, placed in the house of the calling party, is set up with a database 22 containing a set of telephone numbers and DTMF codes for mailbox accessing. The latter codes are necessary when the owner 27 is not a subscriber of the "call line identification presentation" service or when one wishes to provide individual communications to users 25 not at home or users which, in some circumstances, call from a payphone station 26 or from a phone owned by others or from their mobile telephone 23 through the base station subsystem 29.
USER RECOGNITION THROUGH CALL LINE IDENTIFICATION PRESENTATION SERVICE
- The telephone answering-recording machine receives a first ring pulse and subsequently the number of the calling party (25);
- the machine searches the received number in its database;
- if the number is not found it provides a generic conventional announcement (24) like: "we are temporarily absent; please leave a message";
- if the number is found in the database, all actions that have to be carried out for that user are retrieved, which actions may be:
   - hook-on without providing any announcement (undesired user)
   - provide customized announcement
   - store a message
   - at the end, activate the call transfer
   - activate the "stockbroker" supplementary service
   - activate the "conference-bridge" supplementary service.

Combination of these special actions according to a given sequence can also be performed .
USER RECOGNITION THROUGH DTMF MAILBOX ACCESS CODE
- The telephone answering-recording machine prepares itself to recognize a DTMF access code;
- the machine provides a generic announcement;
- if the received code is not recognized, at the end of message storage, the machine ends the operations;
- if the received code is found in the database, all actions that have to be carried out for that user are retrieved, which actions may be:
   - hook-on without providing any announcements
   - provide a customized announcement
   - store a message correlated to the mailbox
   - at the end of storage, activate the call transfer
   - activate the "stockbroker" supplementary service
   - activate the "conference-bridge" supplementary service.

Combinations of these special actions according to a given sequence can also be performed.

Thus the invention achieves all the objects mentioned at the outset.

In fact, the digital telephone answering-recording machine, provided with an improved hardware and software architecture as described above allows the owner 27 to execute, both inside his home and from remote locations, the following operations:
- listen and cancel messages in a conventional manner;
- listen directly to a message correlated with a mailbox;
- add new telephone numbers to, and remove telephone numbers from the database;
- add new mailbox access codes to, and remove codes from the database;
- change the announcements to be provided;
- change the actions correlated with the telephone numbers or access codes;
- activate the call transfer or other supplementary services,in a quick and easy manner, both locally and remotely, via the public switched network 28.

Substantially an indirect exchange of information is allowed, by using a centralized device, but which can be fully handled by the owner.

Further details on the software architecture are not given here, since from the above description contained in the metalanguage, a person having ordinary skill in the art is able to realize the software code also using already available library software primitives (e.g. in Assembler or "C" languages).

## Claims

1. Method of automatically providing, through a subscriber instrument connected to the public switching network, customized telephone announcements to different calling parties, comprising the steps of:
a. setting-up within said terminal a database comprising match data for calling party recognition and correlated actions;
b. receiving a first call tone along with the calling number indication transmitted by the network exchange;
c. recognizing the calling party;
d. taking, upon recognition, one of the following actions:
- hook-on without announcement provision
- customized announcement provision
- message correlated with the calling party identity storage
- supplementary service activation.

2. Method according to claim 1, characterized in that said match data consist in a set of telephone numbers and a set of DTMF mailbox access codes.

3. Method according to claims 1 and 2, characterized in that the calling party recognition is carried out by recognizing the calling number transmitted by the exchange and comparing it with the telephone numbers of the database.

4. Method according to claim 3, characterized in that, in case of lack of recognition (absence of calling number in the database) a generic (non-customized) announcement is provided to the calling party.

5. Method according to claim 4, characterized in that upon transmission of said generic announcement, a DTMF access code can be received for calling party recognition.

6. Method according to claim 5, characterized in that, if the received access code is found in the database, one of the actions set forth at point d) of claim 1 is retrieved.

7. Method according to claim 5, characterized in that, if the received access code is not found in the database, a message is stored and, at the end, the operations are terminated.

8. Method according to claim 1, characterized in that said supplementary service is a call transfer service.

9. Method according to claim 1, characterized in that said supplementary service is a stockbroker service.

10. Method according to claim 1, characterized in that said supplementary service is a conference-bridge service.

11. Method according to claim 1, characterized in that said database is set up and updated both locally and remotely.

12. Method according to claim 1, characterized in that the transmitted announcements are modified both locally and remotely.

13. Method according to claim 1, characterized in that said supplementary service is activated both locally and remotely.

14. Method according to claim 1, characterized in that the actions correlated to said telephone numbers and to said access codes are changeable both locally and remotely.

15. Digital telephone answering-recording machine enabled to provide customized announcements to different calling parties of the type including:
- a line interface circuit for connection to the subscriber telephonic line;
- a central processing unit for controlling the machine;
- means for recognizing DTMF digits connected to said line interface and central processing unit;
- an AID and D/A converter connected to said line interface and said central processing unit for analog to PCM coding/decoding;
- a program random access memory connected to said converter and said central processing unit, for storing the program for the central processing unit,
- user input/output interface , and
a display unit with relative keyboard for data entry, connected to said input/output interface;
said machine being characterized in that it further comprises:
- mass storage means designed to store all information concerning telephone numbers and related messages/announcements and operative instructions,
- driving means for controlling said mass storage means,
- means connected to said line interface and said central processing unit, designed to recognize the calling number indication transmitted by the exchange, and
- an automatic dialer connected to said line interface and to said central processing unit designed to activate the transfer call.

16. Telephone answering-recording machine according to claim 15, characterized in that said display unit is designed to allow the user to carry out search and management operations of said database and to insert and display text messages and operative instructions.

17. Telephone answering-recording machine according to claim 15 characterized in that said mass storage means consists in a disc memory.

18. Telephone answering-recording machine according to claim 15, characterized in that said mass storage means consists in a non-volatile RAM.

19. Digital telephone answering-recording machine according to what herein described and illustrated for the intended objects.
